# EUROPÄISCHE PATENTANMELDUNG

(11) **EP 1 557 697 A2**
(43) Veröffentlichungstag der Anmeldung: **27.07.2005**
(21) Anmeldenummer: 05009625.4
(22) Anmeldetag: 17.02.2002
(51) Int. Cl.: G01V 8/20, F16P 3/14

(54) **Sicherungsverfahren und optoelektronischer Sensor**

(30) Priorität: 05.09.2001 DE 10143505
(62) Teilanmeldung aus: 02015932.3
(71) Anmelder: SICK AG, 79183 Waldkirch (DE)
(72) Erfinder: Braune, Ingolf, 79194 Gundelfingen (DE); Plasberg, Georg, Dr., 79353 Bahlingen (DE)
(74) Vertreter: Manitz, Finsterwald & Partner GbR

(57) **Zusammenfassung**

Die Erfindung betrifft ein Verfahren zur Sicherung eines Gefahrenbereichs eines bewegten, eine Angriffsstelle (27) aufweisenden Werkzeugs (11), insbesondere eines vertikal nach unten bewegten Oberwerkzeugs (11) einer Gesenkbiegepresse, wobei ein optoelektronischer Sensor mit dem Werkzeug (11) mitbewegt wird und den Gefahrenbereich überwacht, und wobei bei Detektion eines Eingriffs in den Gefahrenbereich ein Abschaltvorgang zum Anhalten der Werkzeugbewegung ausgelöst wird. Der optoelektronische Sensor überwacht ein Raumvolumen (29), indem der Sendelichtstrahl einer Sendeeinrichtung mittels einer Sendeoptik aufgeweitet wird und eine ortsauflösende Empfangseinrichtung verwendet wird, die eine matrixförmige Anordnung von Empfangselementen besitzt. Die Erfindung betrifft ferner einen entsprechenden optoelektronischen Sensor.

## Beschreibung

Die Erfindung betrifft ein Verfahren zur Sicherung eines Gefahrenbereichs eines bewegten, eine Angriffsstelle aufweisenden Werkzeugs, insbesondere eines vertikal nach unten bewegten Oberwerkzeugs einer Gesenkbiegepresse, wobei ein optoelektronischer Sensor mit dem Werkzeug mitbewegt wird und den Gefahrenbereich überwacht, und wobei bei Detektion eines Eingriffs in den Gefahrenbereich ein Abschaltvorgang zum Anhalten der Werkzeugbewegung ausgelöst wird. Die Erfindung betrifft ferner einen entsprechenden optoelektronischen Sensor.

Hintergrund der Erfindung ist das Bestreben, Verletzungen einer Bedienperson zu verhindern, die an dem bewegten Werkzeug einer Maschine arbeitet, beispielsweise indem die Bedienperson zu verarbeitende Werkstücke dem Werkzeug zuführt. Im Falle der genannten Gesenkbiegepresse kann - ohne geeignete Sicherungsmaßnahmen - das Oberwerkzeug eine Verletzung oder Abtrennung der Finger oder Hände der Bedienperson verursachen.

Eine unmittelbare Verletzungsgefahr besteht für die Bedienperson innerhalb des Gefahrenbereichs, der sich ausgehend von der Angriffsstelle des Werkzeugs in Bewegungsrichtung des Werkzeugs erstreckt. Die Angriffsstelle des Werkzeugs umfasst beispielsweise einen Stößel oder einen Stempel, und sie erstreckt sich, insbesondere bei der genannten Gesenkbiegepresse, typischerweise entlang einer Längsrichtung, beispielsweise entlang einer Biegelinie oder Schnittkante des bewegten Werkzeugs. Der Gefahrenbereich entspricht somit einem Raumbereich, der zum einen durch die Erstreckung der Angriffsstelle und zum anderen durch den Nachlaufweg des Werkzeugs, also durch die nach Auslösung eines Abschaltsignals vom Werkzeug noch zurückgelegte Wegstrecke vorgegeben ist.

Zur Sicherung dieses Gefahrenbereichs ist es bekannt, zumindest eine Sendeeinrichtung und eine Empfangseinrichtung eines optoelektronischen Sensors mit dem Werkzeugs mitzubewegen. Dieser Sensor überwacht durch ständiges Aussenden und Empfangen eines kollimierten Sendelichtstrahls, ob ein Eingriff in den Gefahrenbereich erfolgt. Falls dies anhand einer Unterbrechung des Sendelichtstrahls detektiert wird, wird ein Abschaltvorgang ausgelöst, der zu einem sofortigen Anhalten der Werkzeugbewegung führt.

Diese bekannten Sicherungsverfahren und -sensoren können nicht in allen Anwendungsfällen die erwünschte Sicherheit bieten. Dies ist zunächst darauf zurückzuführen, dass der von den bekannten Sensoren tatsächlich überwachte Teil des Gefahrenbereichs wegen des Nachlaufweges einen gewissen Abstand von der Angriffsstelle des Werkzeugs einnimmt, so dass der unmittelbar an der Angriffsstelle angrenzende Teil des Gefahrenbereichs nicht überwacht wird. Vor allem jedoch ist das bekannte Überwachungsprinzip im Wesentlichen auf die Erkennung von statischen Eingriffen beschränkt, also von Eingriffen, die zum Zeitpunkt der Werkzeugbewegung bereits bestehen und erst nachfolgend detektiert werden, nämlich wenn aufgrund der Mitbewegung des Sensors das betreffende Körperteil der Bedienperson indirekt in den überwachten Teil des Gefahrenbereichs gelangt.

Es ist eine Aufgabe der Erfindung, bei einem bewegten Werkzeug die Sicherheit der Bedienperson hinsichtlich aller Arten möglicher Eingriffe zu erhöhen, ohne dass hierdurch die Wirtschaftlichkeit des Arbeitsprozesses beeinträchtigt wird.

Diese Aufgabe wird durch ein Verfahren mit den Merkmalen des Anspruchs 1 gelöst, und insbesondere dadurch, dass der optoelektronische Sensor ein Raumvolumen überwacht, indem der Sendelichtstrahl einer Sendeeinrichtung mittels einer Sendeoptik aufgeweitet wird und eine ortsauflösende Empfangseinrichtung verwendet wird, die eine matrixförmige Anordnung von Empfangselementen besitzt.

Die Aufgabe wird für einen optoelektronischen Sensor in entsprechender Weise durch die Merkmale des unabhängigen Anspruchs 10 gelöst.

Mit anderen Worten wird ein Raumvolumen überwacht, indem ein aufgeweiteter Sendelichtstrahl ausgesendet und mittels einer matrixförmig ortsauflösenden Empfangseinrichtung empfangen wird.

Vorzugsweise wird zur erweiterten Sicherung des Gefahrenbereichs gegenüber dynamischen Eingriffen ein Überwachungsbereich mit einer Begrenzungsfläche überwacht, deren Querschnitt parallel zur Werkzeugbewegung und senkrecht zur Erstreckungsrichtung der Angriffsstelle des Werkzeugs sich entlang eines Kreisbogens oder darüber hinaus erstreckt, wobei der Mittelpunkt des Kreisbogens von der Angriffsstelle des Werkzeugs in Bewegungsrichtung des Werkzeugs beabstandet angeordnet ist, und wobei der Kreisbogen einen Radius (Überwachungsradius) aufweist, der wenigstens so groß ist, dass die Begrenzungsfläche des Überwachungsbereichs - zumindest bedienerseitig - sich bis zu der Angriffsstelle des Werkzeugs oder radial darüber hinaus erstreckt.

Die Erfindung sorgt für eine zusätzliche Sicherung gegenüber sogenannten dynamischen Eingriffen, also gegenüber Eingriffen aus der Bewegung des Bedieners, die dann erfolgen, wenn die Werkzeugbewegung bereits begonnen hat. Derartige dynamische Eingriffe erfolgen typischerweise von der Bedienerseite aus, insbesondere von schräg oben oder von vorn. Beispielsweise geschieht es häufig, dass die Bedienperson ein unerwartetes Verrutschen des zu bearbeitenden Werkstücks bemerkt und deshalb - ungeachtet der bereits eingesetzten Werkzeugbewegung - als unmittelbare Reaktion in den Gefahrenbereich nachgreift, um eine Nachjustierung durchzuführen. Auch ein Abrutschen der Hände der Bedienperson von dem während der Werkzeugbewegung gegen eine Anschlageinrichtung zu pressenden Werkstück kann einen typischen dynamischen Eingriff darstellen.

Bei der Erfindung erfolgt eine Sicherung gegenüber derartigen dynamischen Eingriffen, indem zusätzlich eine Überwachung zumindest entlang einer Begrenzungsfläche erfolgt, die - bei beliebiger Form - letztlich eine Art Schutzglocke bildet. Die Begrenzungsfläche besitzt nämlich bezüglich einer Ebene, die parallel zu der Werkzeugbewegung und senkrecht zu der Erstreckungsrichtung der Angriffsstelle des Werkzeugs verläuft, einen Querschnitt, der sich entlang eines Kreisbogens oder - insbesondere in radialer Richtung - darüber hinaus erstreckt.

Bei der Erfindung ist also ein Überwachungsbereich mit einer Begrenzungsfläche vorgesehen, deren minimale Ausdehnung - im Querschnittinsbesondere durch einen Kreisbogen vorgegeben ist. Der Mittelpunkt dieses Kreisbogens liegt - bezogen auf die Bewegungsrichtung des Werkzeugs - vor der Angriffsstelle des Werkzeugs. Im Falle des vertikal nach unten bewegten Oberwerkzeugs einer Gesenkbiegepresse befindet sich der Mittelpunkt des genannten Kreisbogens also in einem gewissen Abstand unterhalb der Angriffsstelle.

Außerdem besitzt der genannte Kreisbogen einen Radius, der wenigstens so groß gewählt ist, dass die genannte Begrenzungsfläche sich in radialer Richtung zumindest bis zu der Angriffsstelle des Werkzeugs erstreckt, so dass bezüglich der Bewegungsrichtung des Werkzeugs keine überwachungsfreie Lücke zwischen der Begrenzungsfläche und der Angriffsstelle des Werkzeugs besteht.

Die Erfindung gewährleistet somit eine verbesserte Sicherung des Gefahrenbereichs gegenüber dynamischen Eingriffen. Dennoch ist - wie bei den bekannten Sicherungsverfahren und -sensoren - ein ungefährliches und somit zulässiges Nachjustieren des zu bearbeitenden Werkstücks möglich, nämlich indem der Überwachungsbereich bzw. dessen Begrenzungsfläche bezüglich der Bewegungsrichtung des Werkzeugs räumlich begrenzt ist, so dass ein Eingriff in den an den Überwachungsbereich anschließenden Raumbereich keinen Abschaltvorgang auslöst.

Zu der erfindungsgemäßen Sicherung ist noch anzumerken, dass der Überwachungsbereich kein geschlossenes Raumvolumen bilden muss. Vielmehr kann auf eine geschlossene Überwachung der Begrenzungsfläche des Überwachungsbereichs beispielsweise in dem Fall verzichtet werden, dass ein Eingriff aufgrund der Geometrie der Werkzeuganordnung aus einer anderen Richtung ausgeschlossen ist. Dies betrifft insbesondere Eingriffe in den Gefahrenbereich von der bedienerabgewandten Seite des Werkzeugs.

Es ist bevorzugt, wenn die Begrenzungsfläche des Überwachungsbereichs an das Werkzeug angrenzt. Auf diese Weise ist nämlich sichergestellt, dass kein Eingriff zwischen der Angriffsstelle des Werkzeugs und dem Überwachungsbereich erfolgen kann, was insbesondere bei schnellen dynamischen Eingriffen zu einer Verletzungsgefahr führen könnte.

Vorzugsweise ist die Begrenzungsfläche des Überwachungsbereichs - entsprechend der minimalen Querschnittsausdehnung gemäß einem Kreisbogen - bezogen auf die Angriffsstelle des Werkzeugs konvex gewölbt.

Um ein möglichst umfassendes Schutzschild gegenüber dynamischen Eingriffen zu erzeugen, erstreckt sich der genannte Kreisbogen - und somit die Begrenzungsfläche des Überwachungsbereichs - vorzugsweise entlang eines Segmentwinkels von wenigstens 30°, insbesondere von ungefähr 90° oder ungefähr 180°. Diese Winkelangaben beziehen sich im Hinblick auf den Anwendungshintergrund einer Gesenkbiegepresse insbesondere auf einen im Wesentlichen vertikalen Überwachungsradius als Ausgangspunkt.

Entsprechend dieser Winkelangaben kann der Querschnitt der Begrenzungsfläche also im Wesentlichen die Form eines Viertelkreises oder eines Halbkreises, der durch das Werkzeug bzw. dessen Angriffsstelle unterbrochen sein kann, besitzen. Mit anderen Worten kann der Überwachungsbereich im Wesentlichen die Form eines Kreisquadranten oder einer Kreishälfte aufweisen.

Weiterhin ist es bevorzugt, wenn die Begrenzungsfläche des Überwachungsbereichs sich entlang der Erstreckungsrichtung der Angriffsstelle des Werkzeugs erstreckt. Die Begrenzungsfläche überdeckt somit beispielsweise die Mantelfläche eines Zylindersegments, insbesondere eines Viertel- oder Halbzylindersegments.

In einer bevorzugten Ausführungsform der Erfindung handelt es sich bei der Begrenzungsfläche entlang des Kreisbogens und/oder entlang der Erstreckungsrichtung der Angriffsstelle des Werkzeugs um eine im Wesentlichen geschlossen überwachte Fläche, so dass jeglicher Eingriff bzw. Durchdringen der Begrenzungsfläche detektiert werden kann. Eine derartige geschlossene Fläche läßt sich beispielsweise durch aneinandergrenzende Lichtstrahlbündel realisieren.

Zu dem Verlauf der Begrenzungsfläche des Überwachungsbereichs ist ferner anzumerken, dass zwar durch den genannten Kreisbogen-Querschnitt die minimale Erstreckung grundsätzlich vorgegeben ist. Allerdings kann der Verlauf an die Form des zu bearbeitenden Werkstücks angepasst sein. Alternativ oder zusätzlich kann die Begrenzungsfläche an einer Stelle unterbrochen sein, an der aufgrund des Aufbaus des Werkzeugs ein Eingriff in den Gefahrenbereich ohnehin inhärent ausgeschlossen ist.

Für die Dimensionierung des Überwachungsbereichs wird vorzugsweise eine Resthöhe berücksichtigt, die bei einem Abschalten bzw. Anhalten des Werkzeugs stets eingehalten wird. Diese Resthöhe bestimmt sich allgemein nach dem größten Körperteil der Bedienperson, das bei dynamischer Annäherung in den Gefahrenbereich gelangen kann. Die notwendige Resthöhe bestimmt sich aus dem definierten Körperteildurchmesser und der zulässigen Quetschung. Für einen Fingerschutz kann eine mögliche Resthöhe beispielsweise ca. 10 bis 14 mm betragen.

Die Berücksichtigung der Resthöhe bei der Erstreckung des Überwachungsbereichs in Bewegungsrichtung des Werkzeugs kann dahingehend erfolgen, dass die Erstreckung - ausgehend von der Angriffsstelle des Werkzeugs - wenigstens die Summe aus dem vorstehend genannten Überwachungsradius und der erläuterten Resthöhe beträgt. Im Falle des vertikal nach unten bewegten Oberwerkzeugs einer Gesenkbiegepresse führt diese Berücksichtigung also zu einer Erweiterung des Überwachungsbereichs nach unten.

Der die Ausdehnung des Kreisbogens vorgebende minimale Überwachungsradius ist bevorzugt durch die Ansprechzeit des gegebenenfalls ausgelösten Abschaltvorgangs und/oder die maximale Annäherungs- bzw. Eintrittsgeschwindigkeit der Bedienperson vorgegeben, insbesondere durch das Produkt aus Ansprechzeit und maximaler Annäherungsgeschwindigkeit. Dadurch ist gewährleistet, dass selbst bei schnellstmöglichem Eingriff der Abschaltvorgang ausgelöst wird, noch bevor das in den Überwachungsbereich eindringende Körperteil der Bedienperson mit dem Werkzeug in Kontakt kommt. Bei einer derartigen Bemessung kann der Überwachungsradius beispielsweise zwischen 20 und 50 mm, insbesondere zwischen 24 und 40 mm betragen.

Alternativ hierzu kann für die Bemessung des Überwachungsradius die Bewegungsgeschwindigkeit des Werkzeugs, die Ansprechzeit des Abschaltvorgangs und/oder der Nachlaufweg des Werkzeugs berücksichtigt werden. Insbesondere kann der Überwachungsradius wenigstens die Summe aus dem Produkt von Bewegungsgeschwindigkeit und Ansprechzeit einerseits und Nachlaufweg andererseits betragen. In diesem Fall ist insbesondere im Hinblick auf einen Eingriff in Verlängerung der Bewegungsrichtung des Werkzeugs der gesamte Bremsweg des Werkzeugs berücksichtigt. Bei einer derartigen Bemessung kann der Überwachungsradius beispielsweise zwischen 6 und 16 mm, insbesondere zwischen 10 und 12 mm betragen.

Was die Lage des Mittelpunkts des erläuterten Kreisbogens betrifft, so kann dieser ausgehend von der Angriffsstelle des Werkzeugs in Bewegungsrichtung des Werkzeugs um wenigstens den Überwachungsradius - gemäß einer der vorstehend erläuterten Berechnungsgrundlagen - beabstandet angeordnet sein.

Die mittels des optoelektronischen Sensors durchgeführte eigentliche Überwachung kann im Wesentlichen lediglich entlang der Begrenzungsfläche des Überwachungsbereichs oder eines Teils hiervon erfolgen. Es ist auch möglich, zusätzlich eine flächige Überwachung entlang weiterer den Überwachungsbereich begrenzenden Flächen vorzusehen, insbesondere entlang jener Fläche, die im Querschnitt dem Radius des genannten Kreisbogens entspricht.

Alternativ oder zusätzlich kann die Überwachung des Überwachungsbereichs innerhalb der Begrenzungsfläche erfolgen, also bezüglich des gesamten von der Begrenzungsfläche eingeschlossenen Raumvolumens.

Schließlich ist zu der Bewegung des Werkzeugs anzumerken, dass diese in eine vergleichsweise schnelle Schließbewegung und eine nachfolgende, langsame Schließbewegung zur Bearbeitung unterteilt sein kann, wobei erst im Rahmen dieser Bearbeitungsbewegung das Werkstück vom Werkzeug erfasst und bearbeitet, insbesondere umgeformt wird.

Der Übergang von der schnellen Schließbewegung in die langsame Schließ- oder Bearbeitungsbewegung erfolgt vorzugsweise in einem Umschaltpunkt, welcher vom Bediener programmiert oder angelernt wird.
Das Ziel des Bedieners ist es, diesen Punkt möglichst dicht an die Werkstückoberfläche zu legen. Die Überwachung bzw. die Schutzeinrichtung wird vorzugsweise ab diesem Umschaltpunkt deaktiviert (sogenanntes Muting), da der Schutz nun durch die langsame Schließ- bzw. Bearbeitungsbewegung erfolgt.

Zu dem für die Überwachung des Überwachungsbereichs vorgesehenen optoelektronischen Sensor ist noch anzumerken, dass dieser als Sende- und Empfangseinrichtung beispielsweise eine Anordnung benachbarter und parallel zueinander verlaufender Lichtschranken aufweisen kann. Dies ist insbesondere dann von Vorteil, wenn lediglich eine flächige Überwachung der Begrenzungsfläche des Überwachungsbereichs erfolgen soll. Insbesondere für den Fall, dass nur die Begrenzungsfläche überwacht wird, kann die Empfangseinrichtung mit einzelnen lichtempfindlichen Bauelementen realisiert werden.

Alternativ hierzu kann die Sendeeinrichtung beispielsweise eine oder mehrere Laserdioden oder Leuchtdioden aufweisen, deren Sendelichtstrahl mittels einer Sendeoptik aufgeweitet wird, so dass diese Sendeeinrichtung sich zur Überwachung eines Raumvolumens eignet. Hierzu kann eine ortsauflösende Empfangseinrichtung vorgesehen sein, beispielsweise CCD- oder CMOS-Empfänger mit einer zeilen- oder matrixförmigen Anordnung von Empfangselementen.

Entsprechend der Überwachungsfunktion ist die Sendeeinrichtung und/oder die Empfangseinrichtung vorzugsweise - bei Überwachung lediglich der Begrenzungsfläche - gemäß dem genannten Kreisbogen bzw. - bei Überwachung des gesamten Überwachungsbereichs - innerhalb des genannten Kreisbogens angeordnet, wobei diese Anordnung sich auf den bereits genannten Querschnitt parallel zur Werkzeugbewegung und senkrecht zur Erstreckungsrichtung der Angriffsstelle des Werkzeugs bezieht. Bei dieser Anordnung verlaufen die Sendelichtstrahlen bevorzugt parallel zur Erstreckungsrichtung der Angriffsstelle des Werkzeugs. Um die Werkzeugbewegung ungehindert durchführen zu können, ist es bevorzugt, wenn die Sendeeinrichtung und/oder die Empfangseinrichtung außerhalb des Gefahrenbereichs des Werkzeugs in einer grundsätzlich bekannten seitlichen Anordnung vorgesehen ist.

Dabei können die Sendeeinrichtung und die Empfangseinrichtung als sogenanntes Aktiv-Aktiv-System in einer unmittelbaren Gegenüberstellung aufgebaut sein, oder als Aktiv-Passiv-System, bei dem die Sendeeinrichtung und die Empfangseinrichtung gemeinsam einem Reflektor gegenüberstehen.

Der erfindungsgemäße Sensor besitzt eine Auswerteeinrichtung, die anhand des Empfangssignals der Empfangseinrichtung eine Unterbrechung des Sendelichts zu erkennen vermag und gegebenenfalls den Abschaltvorgang auslöst. Selbstverständlich muss diese Auswerteeinrichtung nicht mit dem Werkzeug mitbewegt werden.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:
- Fig. 1a und 1b: Teile einer Gesenkbiegepresse in einer schematischen Seitenansicht mit einer weiteren Begrenzungsfläche des Überwachungsbereichs, und zwar zu verschiedenen Zeitpunkten der Werkzeugbewegung,
- Fig. 2, 3 und 4: Teile einer Gesenkbiegepresse in einer schematischen Seitenansicht, jeweils mit unterschiedlichen Begrenzungsflächen des Überwachungsbereichs, und
- Fig. 5a und 5b: Teile einer bekannten Gesenkbiegepresse, und zwar in einer Vorderansicht bzw. einer Seitenansicht.

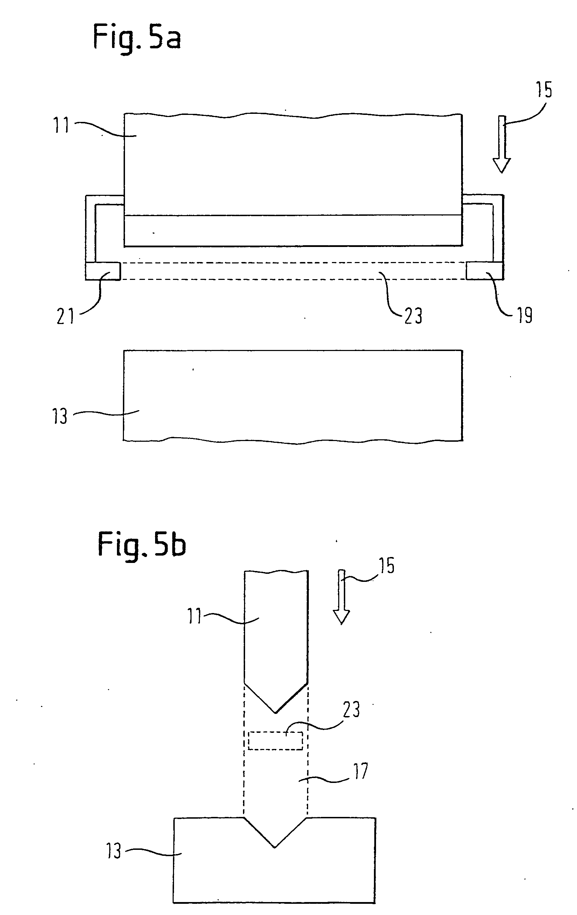

Die in den Fig. 5a und 5b gezeigte bekannte Gesenkbiegepresse besitzt ein Oberwerkzeug 11 und ein Unterwerkzeug 13. Das Oberwerkzeug 11 ist zu einer vertikal nach unten gerichteten Schließbewegung 15 antreibbar, um letztlich ein zwischen das Oberwerkzeug 11 und das Unterwerkzeug 13 eingeführtes Werkstück, beispielsweise ein Blech, zu verformen.

Der räumliche Bereich, der sich ausgehend von dem Oberwerkzeug 11 in Richtung der Schließbewegung 15 bis zu dem Unterwerkzeug 13 erstreckt, bildet einen Gefahrenbereich 17 für die Bedienperson, die das Werkstück zwischen Oberwerkzeug 11 und Unterwerkzeug 13 einführen und dort in einer bestimmten Lage justieren und halten soll (vgl. Fig. 5b).

Für die bekannte Überwachung des Gefahrenbereichs 17 sind eine Sendeeinrichtung 19 und eine Empfangseinrichtung 21 vorgesehen, die in einer Gegenüberstellung an den beiden Seiten des Oberwerkzeugs 11 montiert sind und dementsprechend der Schließbewegung 15 folgen (Fig. 5a). Die Sendeeinrichtung 19 emittiert einen Sendelichtbalken 23 in Richtung der Empfangseinrichtung 21. Der Sendelichtbalken 23 besitzt einen rechteckigen Querschnitt. Er verläuft innerhalb des Gefahrenbereichs 17, und zwar bezüglich der Richtung der Schließbewegung 15 vom Oberwerkzeug 11 geringfügig beabstandet (Fig. 5b).

Falls eine Unterbrechung oder Abschwächung des empfangenen Sendelichts detektiert wird, wird ein Abschaltvorgang ausgelöst, um die Schließbewegung 15 des Oberwerkzeugs 11 anzuhalten. Ein derartiger Abschaltvorgang erfolgt beispielsweise, wenn sich im unteren Teil des Gefahrenbereichs 17 eine Hand der Bedienperson befindet und wenn aufgrund der Abwärtsbewegung 15 des Oberwerkzeugs 11 und somit des Sendelichtbalkens 23 die Hand ab einem gewissen Zeitpunkt zu einer Unterbrechung des Sendelichtbalkens 23 führt (statischer Eingriff).

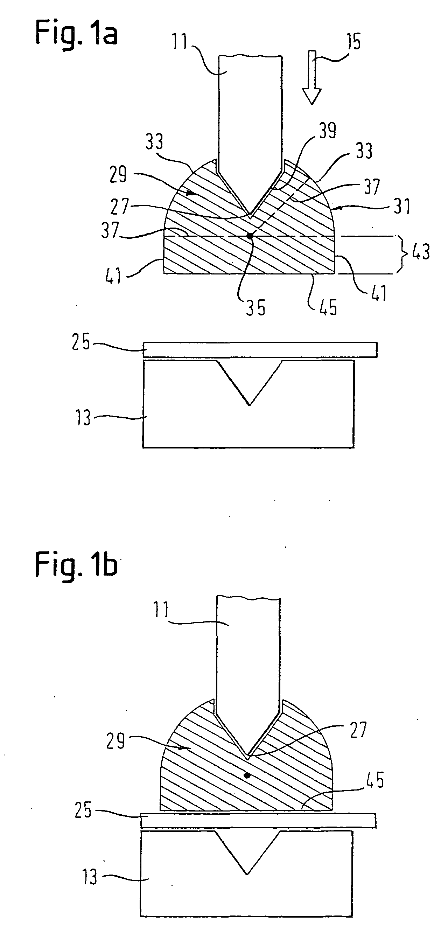

Fig. 1a und 1b zeigen demgegenüber die Überwachung gemäß dem erfindungsgemäßen Verfahren und Sensor.

In Fig. 1a und 1b sind ebenfalls ein Oberwerkzeug 11 sowie ein Unterwerkzeug 13 gezeigt, auf dem ein zu verformendes Werkstück 25 aufliegt. Das Oberwerkzeug 11 führt zunächst eine schnelle Schließbewegung 15 durch. Die Angriffsstelle, also die untere Spitze des Oberwerkzeugs 11 ist mit dem Bezugszeichen 27 gekennzeichnet. Diese Angriffsstelle 27 erstreckt sich als Stempel in Betrachtungsrichtung.

Erfindungsgemäß wird zur Sicherung des Gefahrenbereichs des Oberwerkzeugs 11 ein Überwachungsbereich 29 überwacht, der in den Fig. 1a und 1b schraffiert dargestellt ist und durch eine - in den Fig. 1a und 1b als durchgezogene Linie dargestellte - Begrenzungsfläche 31 begrenzt ist.

Die Begrenzungsfläche 31 besitzt auf den beiden Seiten des Oberwerkzeugs 11 jeweils einen Abschnitt in Form eines Kreisbogens 33. Die beiden Kreisbögen 33 weisen einen gemeinsamen Mittelpunkt 35 auf, der bezüglich der Schließbewegungsrichtung 15 unterhalb der Angriffsstelle 27 des Oberwerkzeugs 11 liegt. Der in Fig. 1a gestrichelt eingezeichnete Radius 37 des jeweiligen Kreisbogens 33 ist so bemessen, dass die Begrenzungsfläche 31 deutlich oberhalb der Angriffsstelle 27 an das Oberwerkzeug 11 anschließt.

Im Bereich des Oberwerkzeugs 11 besitzt die Begrenzungsfläche 31 einen Abschnitt 39, der dem Umriss des Oberwerkzeugs 11 angepasst ist, so dass der Überwachungsbereich 29 im Wesentlichen unmittelbar an das Oberwerkzeug 11 angrenzt. Somit verläuft ein Ende des jeweiligen Kreisbogens 33 im Bereich des Oberwerkzeugs 11 im Wesentlichen in horizontaler Richtung, und das jeweilige andere Ende im Wesentlichen vertikal nach unten. Die beiden Kreisbögen 33 bilden einen Halbkreis, dessen Verlauf im Bereich des Oberwerkzeugs 11 gemäß dem Abschnitt 39 der Begrenzungsfläche 31 an die Form des Oberwerkzeugs 11 angepasst ist.

Außerdem ist der Überwachungsbereich 29 nach unten verlängert, nämlich indem die Begrenzungsfläche 31 zwei Vertikalabschnitte 41 aufweist, die sich an das vertikal auslaufende Ende des jeweiligen Kreisbogenabschnitts 33 anschließen. Die Verlängerung des Überwachungsbereichs 29 gemäß der Vertikalabschnitte 41 nach unten erfolgt somit um eine Resthöhe 43.

Schließlich ist der Überwachungsbereich 29 nach unten durch einen Horizontalabschnitt 45 der Begrenzungsfläche 31 begrenzt.

Die Überwachung des Gefahrenbereichs sowohl innerhalb des Überwachungsbereichs 29 als auch entlang der Begrenzungsfläche 31 erfolgt durch eine - nicht dargestellte - Sendeeinrichtung und Empfangseinrichtung in einer Gegenüberstellung in einer entsprechenden Weise wie in Fig. 5a gezeigt. Demzufolge erstrecken sich der Überwachungsbereich 29 und die Begrenzungsfläche 31 gemäß Fig. 1a und 1b in Betrachtungsrichtung, das heißt parallel zur Erstreckungsrichtung der Angriffsstelle 27 des Oberwerkzeugs 11.

Der Ablauf des Sicherungsverfahrens gestaltet sich wie folgt:

Das Oberwerkzeug 11 wird bei aktivierter Überwachung zunächst zu einer vergleichsweise schnellen Schließbewegung 15 vertikal nach unten angetrieben. Dabei bewegen sich der Überwachungsbereich 29, seine Begrenzungsfläche 31 und somit auch der Mittelpunkt 35 der Kreisbögen 33 mit dem Oberwerkzeug 11 mit. Währenddessen kann unterhalb des Überwachungsbereichs 29 bzw. unterhalb des Horizontalabschnitts 45 der Begrenzungsfläche 31 noch ein Eingriff in den Gefahrenbereich erfolgen.

Falls jedoch ein Eingriff in einem beliebigen Teil des Überwachungsbereichs 29 erfolgt, bzw. wenn die Begrenzungsfläche 31 aufgrund einer Annäherung der Bedienperson an irgendeinem Abschnitt 33, 39, 41, 45 durchdrungen wird, wird dies als Unterbrechung des von der Sendeeinrichtung emittierten Sendelichts detektiert. Daraufhin wird ein Abschaltvorgang ausgelöst, um das Oberwerkzeug 11 anzuhalten und dadurch eine mögliche Verletzung der Bedienperson zu vermeiden.

Sobald das Oberwerkzeug 11 und der Überwachungsbereich 29 die in Fig. 1b gezeigte Lage erreicht haben, wird von der schnellen Schließbewegung 15 auf eine vergleichsweise langsame Berabeitungsbewegung umgestellt, durch die das Werkstück 25 verformt werden soll. Gleichzeitig wird die Überwachung deaktiviert. Der Schutz der Bedienperson wird nun durch die langsame Schließ- bzw. Bearbeitungsbewegung realisiert.

Das Sicherungsverfahren und der Sensor gemäß der Erfindung bieten somit gegenüber der bekannten Sicherung des Gefahrenbereichs gemäß den Fig. 5a und 5b den Vorteil, dass eine Sicherung gegen dynamischen Eingriffen durch die Bedienperson gewährleistet ist. Falls nämlich während der schnellen Schließbewegung 15 ein Eingriff in den Gefahrenbereich, beispielsweise durch ein sogenanntes Nachgreifen erfolgt, ist durch die radiale Erstreckung des Überwachungsbereichs 29 entlang der Kreisbögen 33 um den Radius 37 gewährleistet, dass ein rechtzeitiges Abschalten der Bewegung des Oberwerkzeugs 11 erfolgt.

Im Hinblick auf Eingriffe von schräg oben oder von der Seite ist der Radius 37 beispielsweise wenigstens so groß gewählt, dass er dem Produkt der Ansprechzeit des Abschaltvorgangs und der höchstmöglichen Annäherungsgeschwindigkeit der Bedienperson entspricht.

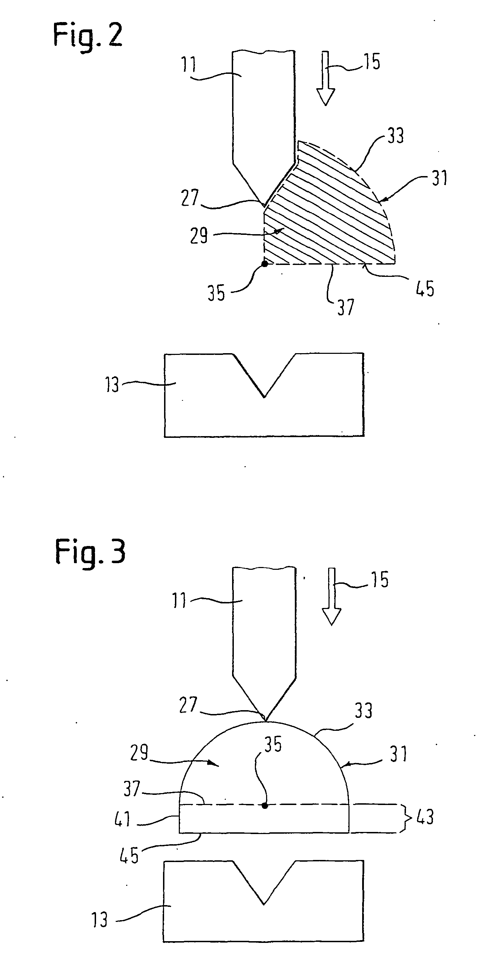

Fig. 2 bis 4 zeigen in entsprechenden Seiten- bzw. Querschnittsansichten weitere Ausführungsformen der erfindungsgemäßen Überwachung.

Bei der Ausführungsform gemäß Fig. 2 ist lediglich auf der der Bedienperson zugewandten Seite des Oberwerkzeugs 11 eine Sicherung vorgesehen, so dass der Überwachungsbereich 29 in der gezeigten Querschnittsansicht im Wesentlichen eine Viertelkreisfläche einnimmt bzw. bezogen auf seine räumliche Ausdehnung ein Viertelzylindersegment umfasst.

In dem Beispiel gemäß Fig. 2 wird die Begrenzungsfläche 31 des Überwachungsbereichs 29 nicht eigens überwacht, wie durch die gestrichelte Darstellung der Begrenzungsfläche 31 zum Ausdruck kommt. Es ist jedoch auch hier möglich, nur die Begrenzungsfläche 31 zu überwachen.

Bei der Ausführungsform gemäß Fig. 3 erfolgt eine Überwachung beispielsweise entlang der Begrenzungsfläche 31, also entlang des Halbkreisbogens 33, der Vertikalabschnitte 41 und des Horizontalabschnitts 45.

Der Mittelpunkt 35 des Kreisbogens 33 ist hier genau um den Radius 37 des Kreisbogens 33 unterhalb der Angriffsstelle 27 angeordnet.

Für den unteren Teil des Überwachungsbereichs 29 ist - ähnlich wie bei der Ausführungsform gemäß Fig. 1a und 1b - eine minimale Resthöhe 43 vorgesehen.

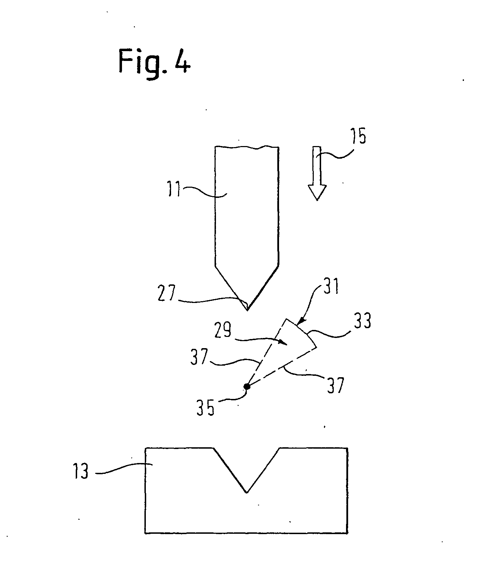

Fig. 4 zeigt die minimal erforderliche Erstreckung der Begrenzungsfläche 31, die erforderlich ist, um eine Sicherung gegenüber Eingriffen von der Seite bzw. von schräg oben zu erzielen.

Hier erfolgt eine Überwachung lediglich entlang des Kreisbogens 33 (durchgezogene Linie) bzw. entlang der Verlängerung des Kreisbogens 33 in Betrachtungsrichtung. Der Kreisbogen 33 erstreckt sich über wenigstens 30°, wobei die Winkelhalbierende des Kreisbogens 33 bzw. des entsprechenden Kreissegments einen Winkel von ca. 45° zur Horizontalen bildet. Die Begrenzungsfläche 31 erstreckt sich somit flächig konvex.

Der Mittelpunkt 35 des Kreisbogens 33 ist um den Radius 37 genau unterhalb der Angriffsstelle 27 angeordnet.

Zu den Ausführungsformen gemäß Fig. 1a, 1b, 2, 3 und 4 ist noch anzumerken, dass die Erstreckung, insbesondere die radiale Erstreckung des Überwachungsbereichs 29 bzw. der Begrenzungsfläche 31 auch über den minimal erforderlichen Überwachungsradius hinausgehen kann. So entspricht der in den Fig. 1a und 1b gezeigte Radius 37 der Kreisbögen 33 nicht unbedingt dem minimal erforderlichen Überwachungsradius, sondern kann über diesen hinausgehen, beispielsweise um ein vollständiges Umschließen der Unterseite des Oberwerkzeugs 11 zu gewährleisten. Es ist auch möglich, dass die Begrenzungsfläche 31 im Querschnitt nicht unbedingt eine Kreisbogenform, sondern beispielsweise einen rechtwinkligen Verlauf besitzt.

### Bezugszeichenliste

- 11: Oberwerkzeug
- 13: Unterwerkzeug
- 15: Schließbewegung
- 17: Gefahrenbereich
- 19: Sendeeinrichtung
- 21: Empfangseinrichtung
- 23: Sendelichtbalken
- 25: Werkstück
- 27: Angriffsstelle
- 29: Überwachungsbereich
- 31: Begrenzungsfläche
- 33: Kreisbogen
- 35: Mittelpunkt
- 37: Radius des Kreisbogens
- 39: Abschnitt der Begrenzungsfläche im Bereich des Oberwerkzeugs
- 41: Vertikalabschnitt der Begrenzungsfläche
- 43: Resthöhe
- 45: Horizontalabschnitt der Begrenzungsfläche

## Patentansprüche

1. Verfahren zur Sicherung eines Gefahrenbereichs (17) eines bewegten, eine Angriffsstelle (27) aufweisenden Werkzeugs, insbesondere eines vertikal nach unten bewegten Oberwerkzeugs (11) einer Gesenkbiegepresse,
wobei ein optoelektronischer Sensor mit dem Werkzeug (11) mitbewegt wird und den Gefahrenbereich überwacht, und wobei bei Detektion eines Eingriffs in den Gefahrenbereich ein Abschaltvorgang zum Anhalten der Werkzeugbewegung ausgelöst wird,
**dadurch gekennzeichnet,**
**dass** der optoelektronische Sensor ein Raumvolumen (29) überwacht, indem der Sendelichtstrahl einer Sendeeinrichtung mittels einer Sendeoptik aufgeweitet wird und eine ortsauflösende Empfangseinrichtung verwendet wird, die eine matrixförmige Anordnung von Empfangselementen besitzt.

2. Verfahren nach Anspruch 1,
**dadurch gekennzeichnet,**
**dass** die ortsauflösende Empfangseinrichtung einen CCD-Empfänger oder einen CMOS-Empfänger aufweist.

3. Verfahren nach einem der vorhergehenden Ansprüche,
**dadurch gekennzeichnet,**
**dass** die Überwachung zumindest entlang einer geschlossenen Begrenzungsfläche (31) des Raumvolumens (29) erfolgt.

4. Verfahren nach Anspruch 3,
**dadurch gekennzeichnet,**
**dass** die Überwachung auch im Raumvolumen (29) innerhalb der Begrenzungsfläche (31) erfolgt.

5. Verfahren nach einem der vorhergehenden Ansprüche,
**dadurch gekennzeichnet,**
**dass** das überwachte Raumvolumen (29) eine Begrenzungsfläche (31) besitzt, die bezüglich der Angriffsstelle (27) des Werkzeugs (11) konvex gewölbt ist.

6. Verfahren nach einem der vorhergehenden Ansprüche,
**dadurch gekennzeichnet,**
**dass** das überwachte Raumvolumen (29) bezüglich der Angriffsstelle (27) des Werkzeugs in Bewegungsrichtung (15) des Werkzeugs angeordnet ist.

7. Verfahren nach einem der vorhergehenden Ansprüche,
**dadurch gekennzeichnet,**
**dass** das überwachte Raumvolumen (29) eine Begrenzungsfläche (31) besitzt, die sich parallel zu der Erstreckungsrichtung der Angriffsstelle (27) des Werkzeugs (11) erstreckt.

8. Verfahren nach einem der vorhergehenden Ansprüche,
**dadurch gekennzeichnet,**
**dass** das überwachte Raumvolumen (29) eine Begrenzungsfläche (31) besitzt, deren Verlauf an die Form des Werkzeugs (11), an die Form des zu bearbeitenden Werkstücks und/oder an einen geometriebedingten Ausschluss eines Eingriffs angepasst ist.

9. Verfahren nach einem der vorhergehenden Ansprüche,
**dadurch gekennzeichnet,**
**dass** die Bewegung des Werkzeugs (11) in eine Schließbewegung (15) und eine nachfolgende langsamere Bearbeitungsbewegung unterteilt ist,
wobei der Übergang von der Schließbewegung (15) zu der Bearbeitungsbewegung insbesondere zu einem Zeitpunkt erfolgt, zu dem das überwachte Raumvolumen (29) unmittelbar oder mit einem Abstand von weniger als 10 mm an die Sollposition des zu bearbeitenden Werkstücks (25) anschließt,
und/oder
wobei die Überwachung des Raumvolumens (29) insbesondere zum Zeitpunkt des Übergangs von der Schließbewegung (15) zu der Bearbeitungsbewegung deaktiviert wird.

10. Optoelektronischer Sensor zur Sicherung eines Gefahrenbereichs (17) eines bewegten, eine Angriffsstelle (27) aufweisenden Werkzeugs, insbesondere eines vertikal nach unten bewegten Oberwerkzeugs (11) einer Gesenkbiegepresse,
wenigstens mit einer Sendeeinrichtung zum Aussenden eines Sendelichtstrahls in Richtung des Gefahrenbereichs, einer Empfangseinrichtung zum Detektieren des Sendelichtstrahls, und einer Auswerteeinrichtung zum Auslösen eines Abschaltvorgangs bei Detektion eines Eingriffs in den Gefahrenbereich,
wobei der Sensor zumindest teilweise mit dem Werkzeug (11) mitbewegbar ist, und
wobei der Sensor insbesondere zur Durchführung des Verfahrens nach einem der vorhergehenden Ansprüche ausgebildet ist,
**dadurch gekennzeichnet,**
**dass** der optoelektronische Sensor zur Überwachung eines Raumvolumens (29) ausgebildet ist, wobei der Sensor eine Sendeoptik aufweist, die den Sendelichtstrahl der Sendeeinrichtung aufweitet, und
wobei die Empfangseinrichtung ortsauflösend ausgebildet ist und eine matrixförmige Anordnung von Empfangselementen aufweist.

11. Sensor nach Anspruch 10,
**dadurch gekennzeichnet,**
**dass** die ortsauflösende Empfangseinrichtung einen CCD-Empfänger oder einen CMOS-Empfänger aufweist.

12. Sensor nach einem der Ansprüche 10 oder 11,
**dadurch gekennzeichnet,**
**dass** der optoelektronische Sensor zur Überwachung zumindest einer geschlossenen Begrenzungsfläche (31) des Raumvolumens (29) ausgebildet ist.

13. Sensor nach einem der Ansprüche 10 bis 12,
**dadurch gekennzeichnet,**
**dass** das überwachte Raumvolumen (29) eine Begrenzungsfläche (31) besitzt, die bezüglich der Angriffsstelle (27) des Werkzeugs (11) konvex gewölbt ist.

14. Sensor nach einem der Ansprüche 10 bis 13,
**dadurch gekennzeichnet,**
**dass** die Sendeeinrichtung wenigstens eine Laserdiode oder Leuchtdiode aufweist.
